# EUROPEAN PATENT APPLICATION

(11) **EP 2 939 859 A1**
(43) Date of publication of application: **04.11.2015**
(21) Application number: 14166185.0
(22) Date of filing: 28.04.2014
(51) Int. Cl.: B60K 15/03, B65D 45/32, B65D 63/10

(54) **System for attaching a component to a container for a motor vehicle**

(71) Applicant: Inergy Automotive Systems Research (Société Anonyme), 1120 Bruxelles (BE)
(72) Inventor: Leonard, Stephane, B-1090 BRUSSELS (BE)
(74) Representative: Remy, Vincent Noel Paul

(57) **Abstract**

It is proposed a system for attaching a component to a tank for a motor vehicle, the tank having a wall portion and a tubular attachment portion projecting outward from the wall portion, the attachment portion defining an opening in the wall portion, the component being placed on the attachment portion. The system comprises a plastic clamp (100) comprising:
- at least one strip (1) equipped with a toothed portion (2); and
- at least one head (3, 4) formed onto the strip, the head comprising a complementary toothed portion, the head being configured to receive and lock the strip by means of the complementary toothed portion.

The plastic clamp engages and is closed onto the component and the attachment portion by pulling tight the strip through the head.

## Description

The present invention relates to a system for attaching a component to a fluid container, such as a fuel tank or a urea tank which is provided in a motor vehicle (i.e. passenger car, truck, etc.).

Liquid and gas tanks carried on board vehicles generally have to satisfy sealing and permeability standards related to the type of use for which they are designed and the requirements in terms of environmental considerations that they have to meet.

Incorporating components into such tanks presents the problem of attaching them in a sealed and impermeable way to an opening made in these tanks. In addition, it is also desirable that the component be mounted to the tank so as to be removable for service and repair purposes.

Various techniques for attaching a component to a tank are already known. For example, cam lock systems or mason jar systems are well known by the skilled person. Generally, these known systems use a ring or a lock nut configured to be screwed onto a thread on the tank side. Depending on the design and size of the component, the ring or the lock nut can be relatively large and thus difficult to accommodate. Accordingly, the ground clearance of the tank assembly is reduced. Further, in some situations, it is not possible to use a simple vertical screw device for screwing the lock nut (of the mason jar system) on the threaded portion of the tank. In such situations, specific pinions, racks or endless screws need to be used. Accordingly, the attachment operation of the component to the tank is complex, time-consuming and expensive.

In view of the above, there is a need for an improved attachment system which is easy to use and which meets maximal permeability and safety requirements.

An object of the present invention is to solve these above-mentioned problems by proposing a system for attaching a component to a tank for a motor vehicle, said tank having a wall portion and a tubular attachment portion projecting outward from said wall portion, said attachment portion defining an opening in said wall portion, said component being placed on said attachment portion. The system is such that it comprises a plastic clamp comprising:
- at least one strip equipped with a toothed portion; and
- at least one head formed onto the strip, said head comprising a complementary toothed portion, said head being configured to receive and lock the strip by means of the complementary toothed portion.
According to one aspect of the present invention, the plastic clamp engages and is closed onto the component and the attachment portion by pulling tight the strip through the head.

Thus, it is proposed a simple and economic system for attaching a component to a tank (i.e. container). Indeed, it is proposed to use a plastic clamp for fastening the component to the tank. More precisely, the fastening operation simply consists in grabbing and pulling a strip. Such pulling operation can either be performed manually by an operator or automatically by a machine.

Advantageously, the strip comprises a toothed portion and the head comprises a complementary (i.e. opposing) toothed portion. Advantageously, the head comprises a through-opening through which the strip can be inserted. When the strip is inserted in the head and once the strip is pulled tight, the head locks the strip against withdrawal. Accordingly, once the strip has been pulled tight, the component is securely attached to the tank. In other words, the component is tightly pressed against the tubular attachment portion of the tank. The component remains securely attached to the tank as long as the strip is not cut (for example). It is to note that the attachment system of the present invention is particularly well suited for service and repair operations, since the component can be removed (i.e. separated) from the tank by simply cutting the strip.

It will be appreciated that the arrangement of the head and the one-way sliding strip, by virtue of the adjustable insertion length of the strip, facilitates a "one size fits all" arrangement, applicable across a wide range of components of different size/shape.

According another embodiment, the plastic clamp can be made in two halves clamp, each one having a strip with a toothed portion and at least one head formed onto the strip comprising a complementary toothed portion. In a particular embodiment, the two halves clamp can be identical. For example, for attaching the component to the tank, the strip of the first half clamp can be inserted in the head of the second half clamp and the strip of the second half clamp can be inserted in the head of the first half clamp.

Here, a component is to be understood to mean any part obtained by a shaping technique such as, for example, blow moulding or injection moulding or any other technique known to those skilled in the art. Advantageously and nonlimitingly, the component may be chosen from a pipette, an end piece, a neck, a valve, a pump module or a baseplate supporting components (pump, gauge, sensors, swirl pot, etc.).

In a preferred embodiment, the attachment system of the present invention comprises a sealing ring disposed between the component and the attachment portion of the tank. Advantageously, the sealing ring is clamped between the component and the attachment portion of the tank when the plastic clamp is closed onto the component and the attachment portion of the tank. Therefore, a secure and sealable connection can be ensured.

In an advantageous embodiment, the plastic clamp comprises at least one internal mouth configured to engage the component and the attachment portion of the tank.

In a particular embodiment, the internal mouth is configured to resiliently clip the component and the attachment portion of the tank.

In a particular embodiment, the plastic clamp comprises a series of internal mouths regularly spaced along the strip. The space between the internal mouths allows flexibility of the plastic clamp for its diameter reduction during closing.

In a particular embodiment, each internal mouth has a contact surface having a conical like structure, but this is not mandatory. For example, the internal mouth can have a cross section substantially of "V" shape.

In another particular embodiment, the internal mouth can have a cross section substantially of "U" shape.

Advantageously, the plastic clamp comprises at least one rib placed between each internal mouth and the strip. The function of such rib(s) is to prevent the opening of the internal mouth by applying an opposing force against the force applied by the sealing ring.

In a preferred embodiment, the plastic clamp is an integral injection molded part. Therefore, the plastic clamp is easy to manufacture and low cost.

In an advantageous embodiment, the toothed portion and/or the complementary toothed portion comprise(s) teeth obtained by overmoulding metal inserts with plastic material. Therefore, mechanical resistance is improved.

Advantageously, the plastic clamp comprises at least one extension on which an external element can be fixed.

According to an aspect of the present invention, there is provided a fuel tank assembly for a motor vehicle comprising a fuel tank and at least one component, the component being attached to the fuel tank by a system as described above.

According to another aspect of the present invention, there is provided an ammonia precursor tank assembly for a motor vehicle comprising an ammonia precursor tank and at least one component, the component being attached to the ammonia precursor tank by a system as described above. In a particular embodiment, the ammonia precursor is a urea solution.

Advantageously, the tank and the plastic clamp are made from plastic.

The term "plastic" is understood to mean any synthetic polymeric material, whether thermoplastic or thermosetting, which is in the solid state under ambient conditions, as well as blends of at least two of these materials. The intended polymers comprise both homopolymers and copolymers (especially binary or ternary copolymers). Examples of such copolymers are, non-limitingly : random copolymers, linear block copolymers, other block copolymers, and grafted copolymers. Thermoplastic polymers, including thermoplastic elastomers, and blends thereof, are preferred. In particular, the tank and the plastic clamp may be made of polyolefins, grafted polyolefins, thermoplastic polyesters, polyketones, polyamides and copolymers thereof. High-density polyethylene (HDPE) can be used.

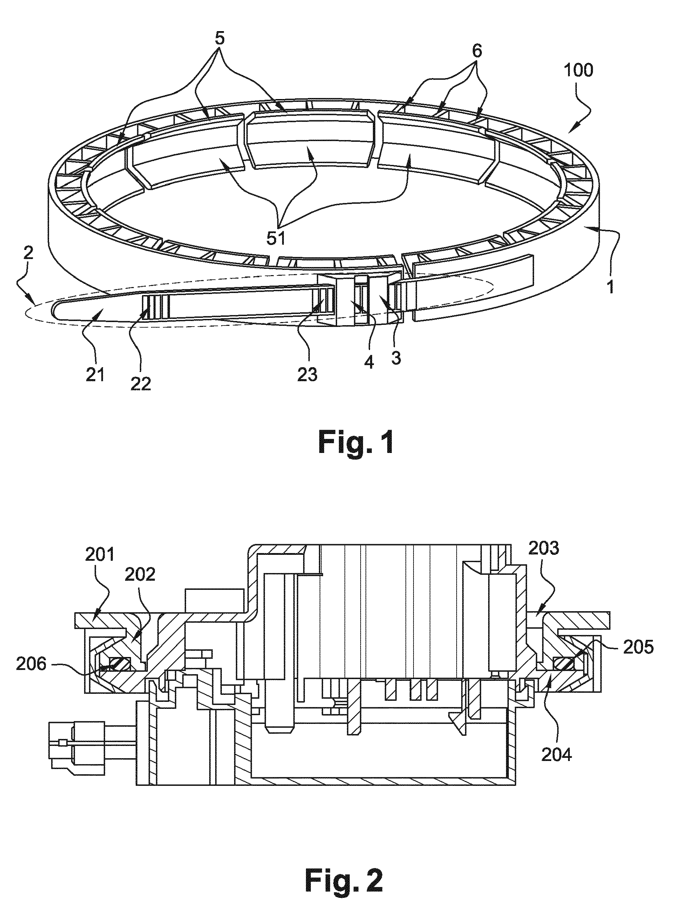

The present invention is illustrated in a non limitative way by the examples below relying on figures 1, 2, 3a-3e and 4 attached. In these figures, identical or similar elements bear identical reference numbers.

Figure 1 is a CAD-drawing representing a plastic clamp according to a first particular embodiment of the present invention.

As illustrated in the example of Figure 1, the plastic clamp (100) comprises a strip (1) equipped with a toothed section (2) and two heads (3, 4) formed onto the strip (1). The toothed section (2) comprises a tab (21) equipped with two series of teeth (22, 23). The first series of teeth (22) is used for pre-closing operation and the second series of teeth (23) is used for final closing operation. It is an advantage to have a flat section (i.e. section with no teeth) between the first and second series of teeth, since the pull force for intermediate closing of the plastic clamp (100) can be reduced. The heads (3, 4) are configured to receive and lock the tab (21). Each head (3, 4) accommodates complementary teeth (not illustrated) which cooperate with the first and second series of teeth (22, 23). In this particular embodiment, the plastic clamp (100) comprises twelve internal mouths (5) regularly spaced along the strip (1). As illustrated, each internal mouth has a contact surface (51) having a conical like structure. Advantageously, the plastic clamp (100) comprises a plurality of ribs (6) placed between the internal mouths (5) and the strip (1). In this particular embodiment, the plastic clamp (100) comprises six ribs (three on the top side and three other on the bottom side) per internal mouth.

Figure 2 is a CAD-drawing representing a partial cross-section of a tank assembly according to a particular embodiment of the present invention.

The tank assembly comprises a tank having a wall portion (201) and a tubular attachment portion (202) projecting outward from said wall portion. The attachment portion (202) defines an opening (203) in the wall portion of the tank. The tank assembly further comprises a component (204) which is attached to the attachment portion (202) by means of the plastic clamp (100). The attachment portion (202) comprises a groove (205). An O ring seal (206) is arranged in the groove (205). In Figure 2, the plastic clamp (100) is in a final closing position. Accordingly, the component (204) is tightly pressed against the attachment portion (202). The O ring seal (206) is compressed axially between the attachment portion (202) and the component (204).

In this example, the tank (202) is a urea tank and the component (201) is a baseplate which incorporates and/or supports at least one active component such as, for example, a pump, a filter, a level sensor, a quality sensor, a temperature sensor or a heater. A part of this baseplate is positioned through the opening (203).

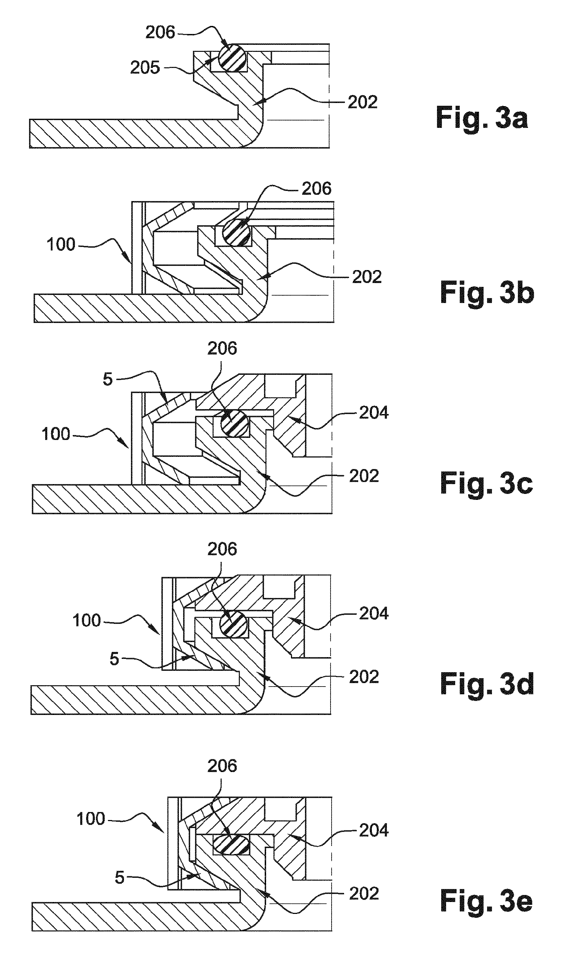

Figures 3a to 3e illustrate an example of steps for attaching the component (204) to the attachment portion (202) by means of the plastic clamp 100.

At a first step (Figures 3a), the O ring seal (206) is arranged in the groove (205).

At a next step (Figure 3b), the plastic clamp 100 is pre-closed while being positioned on the attachment portion (202) of the tank.

At a next step (Figure 3c), the component (204) is placed on the attachment portion (202).

At a next step (Figure 3d), an operator or a machine starts pulling the tab (21) to make the plastic clamp 100 self-centering with respect to the component (204) and the attachment portion (202). At this step, the internal mouths (5) start engaging the component (204) and the attachment portion (202).

At a final step (Figure 3e), the tab (21) is pulled tight such that the internal mouths (5) closed onto the component (204) and the attachment portion (202). Accordingly, the component (204) is securely attached to the tank. Further, the O ring seal (206) is compressed axially between the attachment portion (202) and the component (204).

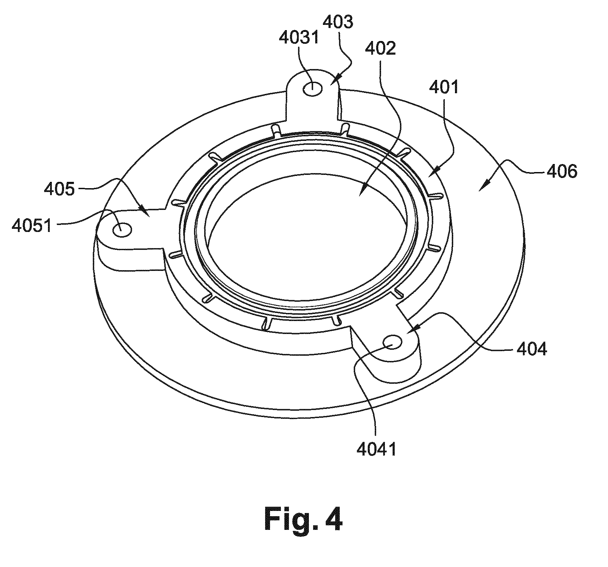

Figure 4 is a CAD-drawing representing a plastic clamp according to a second particular embodiment of the present invention.

As illustrated in the example of Figure 4, the plastic clamp (401) is used to attach a component (402) to a tank (406). In this particular embodiment, the plastic clamp (401) comprises three extensions (403, 404, 405). Each extension is provided with an orifice (4031, 4041, 4051). These orifices can be used to attach, for example, a protection plate, some clips for hydraulic lines or wiring harnesses. Thus, these extensions (403, 404, 405) can advantageously be used as fixation points.

## Claims

1. System for attaching a component (204) to a tank for a motor vehicle, said tank having a wall portion (201) and a tubular attachment portion (202) projecting outward from said wall portion, said attachment portion defining an opening in said wall portion, said component being placed on said attachment portion, wherein the system comprises a plastic clamp (100) comprising:
- at least one strip (1) equipped with a toothed portion (2); and
- at least one head (3, 4) formed onto the strip, said head comprising a complementary toothed portion, said head being configured to receive and lock the strip by means of the complementary toothed portion;
and wherein said plastic clamp engages and is closed onto said component and said attachment portion by pulling tight the strip through the head.

2. System according to the preceding claim, wherein it comprises a sealing ring (206) disposed between said component and said attachment portion, and wherein said sealing ring is clamped between said component and said attachment portion when said plastic clamp is closed onto said component and said attachment portion.

3. System according to any one of claims 1 and 2, wherein the plastic clamp comprises at least one internal mouth (5) configured to engage said component and said attachment portion.

4. System according to the preceding claim, wherein the plastic clamp comprises a series of internal mouths regularly spaced along the strip.

5. System according to any one of claims 3 and 4, wherein each internal mouth has a contact surface having a conical like structure.

6. System according to the preceding claim, wherein the plastic clamp comprises at least one rib (6) placed between each internal mouth and the strip.

7. System according to any one of claims 1 to 6, wherein the plastic clamp is an integral injection molded part.

8. System according to any one of claims 1 to 7, wherein the toothed portion and/or the complementary toothed portion comprise(s) teeth obtained by overmoulding metal inserts with plastic material.

9. System according to any one of claims 1 to 8, wherein the plastic clamp comprises at least one extension (403, 404, 405) on which an external element can be fixed.

10. Fuel tank assembly for a motor vehicle comprising a fuel tank and at least one component, the component being attached to the fuel tank by a system according to any one of claims 1 to 9.

11. Ammonia precursor tank assembly for a motor vehicle comprising an ammonia precursor tank and at least one component, the component being attached to the ammonia precursor tank by a system according to any one of claims 1 to 9.
